# EUROPEAN PATENT SPECIFICATION

(11) **EP 2 075 537 B1**
(45) Date of publication and mention of the grant of the patent: **20.03.2019**
(21) Application number: 08020985.1
(22) Date of filing: 03.12.2008
(51) Int. Cl.: G01C 21/34

(54) **Navigation apparatus and program**
Navigationsgerät und Navigationsprogramm
Appareil et programme de navigation

(30) Priority: 25.12.2007 JP 2007332407
(43) Date of publication of application: 01.07.2009
(73) Proprietor: AISIN AW CO., LTD., Anjo-shi, Aichi 444-1192 (JP)
(72) Inventor: Hosoi, Yasuki, Okazaki-shi Aichi 444-8564 (JP); Iwata, Tominori, Okazaki-shi Aichi 444-8564 (JP); Matsuhisa, Shougo, Okazaki-shi Aichi 444-8564 (JP)
(74) Representative: Kramer Barske Schmidtchen Patentanwälte PartG mbB

(56) References cited:
- EP-A1- 0 504 854
- EP-A1- 0 782 120
- EP-A2- 0 854 353
- EP-A2- 0 943 895
- JP-A- H08 128 843
- JP-A- H11 257 987
- JP-B2- 2 949 887
- US-A- 5 712 788
- US-A1- 2003 154 023
- US-B1- 6 507 850

## Description

### BACKGROUND

### 1. Field of the Invention

The present invention relates to a navigation apparatus and a program for maintaining a quality of a route and reducing time for a route-searching.

### 2. Description of the Related Art

When searching for a route in a navigation system, various costs are respectively set on a link or between-links (a node) depending on road types such as an express way, a toll road, a national road, a main local road, a prefecture road, or narrow street, the existence of traffic restrictions such as no-turns or one-way traffic, a link length, a width of a road, number of traffic lanes, and so forth. When searching for an optimum route from an own vehicle to a destination, a route is searched from a departure side and from a destination side along links stored in map data. A cumulated cost from the departure side and a cumulated cost from the destination side is added in an overlapped searched area from the departure side and the destination side. Then, a route with a smallest value of the added cost is set to be an optimum guided route.

Japanese Unexamined Application Publication ("kokai") No. 4-301515 discloses a searching method by hierarchy using map data with hierarchical structure. In the map data with hierarchical structure, a lower level hierarchical layer is the detailed map data having data for every road and an upper level hierarchical layer has wide-area map data inducing data for main roads only. In the searching method by hierarchy, a cost is calculated using the detailed map data at the vicinity of a departure place and a destination, a calculation is briefly made using more rough map data at an intermediate area of a route, and a guided route is outputted by combining the both results. According to suchlike searching method by hierarchy, when the distance between the departure and the destination is far, the intermediate route can be searched by using rough map data; therefore, the overall time necessary for the route-searching can be reduced comparing to the case of searching an entire route with detailed map data.

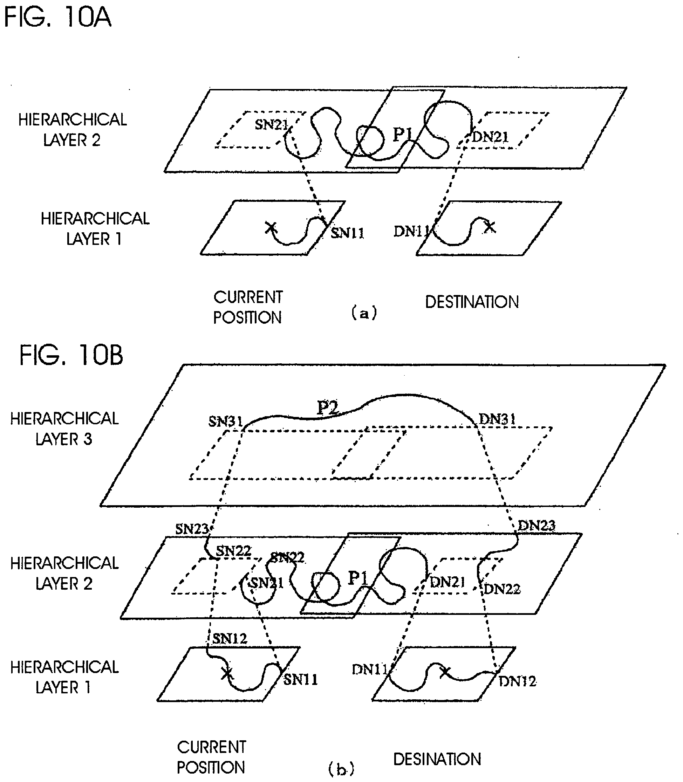

Japanese Unexamined Application Publication ("kokai") No. 11-257987 discloses a method for obtaining an optimum route with shorter time, in which, when a route with a shortest cost is confirmed with lower level hierarchical map data where a route was searched, the route-searching is terminated at that time and any route-searching will not be performed for an upper level hierarchical map data which is a target for a route-searching. In FIG. 10 (a), for example, a predetermined area is searched at a current position (a departure) side and a destination side on a hierarchical layer 1 including detailed map data each. Then a boundary node SN11 having a smallest searching cost is searched in the area of the departure side and a boundary node DN11 having a smallest searching cost is searched in the area of the destination side. Then, they move to nodes SN21 and DN21 corresponding to these boundary nodes on a hierarchical layer 2 and a route-searching is performed on the hierarchical layer 2. When a route from the departure side connects to a route from the destination side in an overlapped area on the hierarchical layer 2, a route P1 becomes an optimum route.

EP 0 854 353 A2 relates to the determination of routes in a vehicle navigation system, wherein the determination is terminates once a route having lowest costs is determined.

US 5,712,788 relates to a method and apparatus for determining a route from a source location to a final destination by determining at least one intermediate destination, so that a user may begin driving before the entire route to the final destination has been determined.

US 6,507,850 B1 relates to a system and method for facilitating access to and use of geographic data used with navigation application program that provides navigating features and functions to an end-user, similar to the disclosure of EP 0943 895 A2.

### SUMMARY

With the above-described conventional route-searching method, however, when combining the hierarchical map data and the route-searching algorithm, the algorithm for reducing time for the route-searching does not guarantee that the route P1 obtained from the route-searching is the optimum route in term of quality. In FIG. 10 (b), for example, there is a boundary node SN12 at the departure side and a boundary node DN12 at the destination side which reached cost to the boundary of the predetermined area on the layer 1 is not the smallest. In a search wherein nodes SN22 and DN22 on the layer 2 corresponding to these boundary nodes are the starting points, nodes SN23 and DN23 which reached cost to the boundary is the smallest in the predetermined area of the departure side and the destination side on the layer 2 are searched. In a search wherein nodes SN31 and DN31 on the layer 3 corresponding to the nodes SN23 and DN23 are the starting points, a route P2 is searched. Now, there is a possibility that the searching cost of the route P2 is smaller than the searching cost of the route P1. If the searching cost of the route P2 is smaller, it is deemed to be more optimum route than the route P1 in terms of quality. That is, finding a route that connects a departure and a destination as fast as possible by using map data with hierarchical structure does not mean that an optimum route in terms of time and quality, which is a route with the smallest searching cost, can be searched. Because, for example, there is a possibility that a route including a winding mountain road or the like will be searched. Fundamentally, the relation between the short time for searching for the route and the quality of the route is inversely proportional. Therefore, it has been very difficult to perform a fast and also high-quality route-searching.

Accordingly, it is an object of the present invention to provide a method, a navigation apparatus and a computer program that maintain the quality of a route obtained from a route-searching.

This object is achieved by the subject-matters of claims 1 to 3.

### BRIEF DESCRIPTION OF THE DRAWINGS

Preferred embodiments of the present invention will now be described with reference to the accompanying drawings, wherein:
FIG. 1 is a block diagram showing an example of a navigation system according to the present embodiment of the invention.
FIG. 2 is a diagram showing an outline of a route-searching and a cost-marking processing.
FIG. 3 is a flowchart showing an entire flow of a route-searching processing.
FIG. 4 is a diagram showing a search starting point at a departure side and a destination side.
FIG. 5 is a flowchart showing a flow of a search processing using Dijkstra method.
FIG. 6 is a diagram showing a cost-marking to a node on a search hierarchy.
FIG. 7 is a flowchart showing a route-searching termination judgment.
FIG. 8 is a flowchart showing a flow of a cost-marking processing to an upper level hierarchy.
FIG. 9 is a diagram showing a cost-marking to an upper level hierarchy.
FIG. 10 (a), (b) are diagrams showing a route-searching using map data with a hierarchical structure.

### DESCRIPTION OF THE PREFERRED EMBODIMENTS

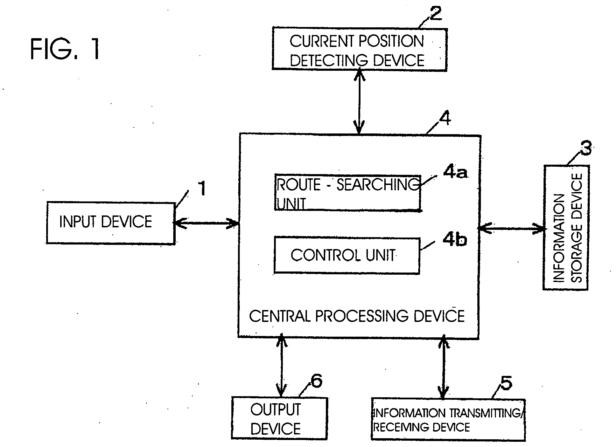

An embodiment will now be described. As shown in FIG. 1, a navigation apparatus comprises an input device 1 including a keyboard, a mouse, a touch panel, an operation key, and so forth for inputting information of a departure place or a destination, a current position detecting device 2 for detecting information regarding a current position, an information storage device 3 for storing map data with hierarchical structure in which each of the hierarchical layers has a plurality of blocks, intersection data, navigation data necessary for a route-searching, a display/voice guidance data necessary for a route-guiding, a program for giving a guidance such as a map display, a route-searching, voice guidance, and so forth (an application and/or OS), a central processing device 4 including a route-searching unit 4a for reading out map data with hierarchical structure, searching a route within a predetermined area at a departure side and a destination side, and obtaining a route with a shortest cost in a range of an overlapped search area and a control unit 4b for judging the quality of a route searched by the route-searching unit by comparing the cost and controlling a search processing by the route-searching unit, and performs a map display processing as a navigator processing unit, a display/voice guidance processing necessary for a route guidance, and an entire system control, an information transmitting/receiving device 5 that transmits/receives information regarding vehicle travels such as road information or traffic information, detects information regarding a vehicle current position, and further transmits/receives information regarding a current position, and an output device 6 such as a display, a speaker, or the like that outputs information regarding route guidance.

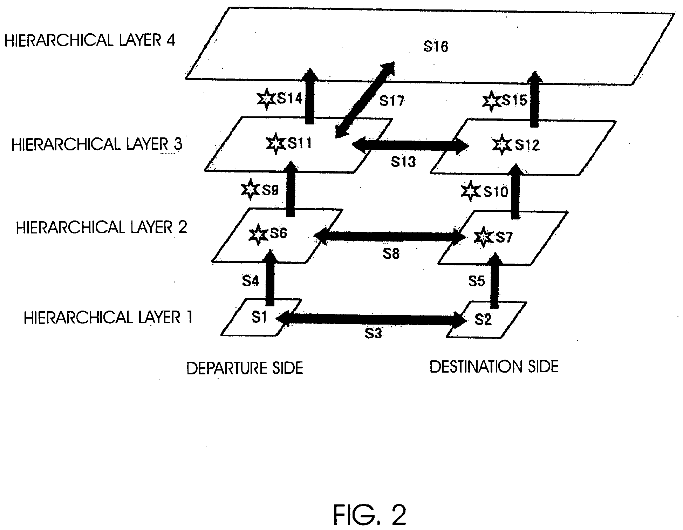

FIG. 2 is a diagram illustrating an outline of a route-searching and a cost-marking processing. A processing in the case of using map data with four-hierarchical structure is shown herein. The map data with hierarchical structure includes a plurality of blocks of predetermined area (An area with larger volume of data is narrower.) on each layer. A lower level hierarchy includes detailed map data with data for every road and an upper level hierarchy includes wide-area map data with data for main roads only. First, a route is searched in a predetermined area of a departure side and a destination side by using detailed map data on a hierarchical layer 1 (Steps S1 and S2). If the route searched in the each of the areas is overlapped, a cost is obtained as a route with a shortest cost (Step S3). Next, nodes on the layer 2 corresponding to boundary nodes that have been reached on each area in the search of the layer 1 are obtained (Steps S4 and S5). Then, the each of the nodes are set as starting points to search a route and a reached cost of the each node is held (The stars in the figure indicate that a cost is held) . If the route searched in the area of the departure side and the destination side is overlapped on the layer 2 and the cost of the connected route is smaller than the cost of the route with the shortest cost obtained on the layer 1, the cost of the route with the shortest cost is updated (Step S8). Thereafter in like wise, when a route is searched in the each area of the departure side and the destination side on the layer 3 and the route searched in the each area is overlapped and the cost of the connected route is also smaller than the cost of the route with the shortest cost obtained on the lower level hierarchy, the cost of the route with the shortest cost is updated and the procedure moves to the most upper level hierarchy 4 (Steps S9 to S15). On the most upper level hierarchy 4, the route has to be connected; therefore, a search is executed from the destination side (Step S16) and, if the cost of the route obtained on the most upper level hierarchy 4 is smaller than the cost of the route with the shortest cost on the lower level hierarchy, the cost of the route with the shortest cost is updated (Step S17). As described above, the quality (cost) of the obtained route is maintained by continuing a search on each hierarchy until a route with shortest cost is defined. In addition, if a reached cost of a node on the each hierarchy is bigger than the cost of the route with the shortest cost, any further cost-marking will not be executed for a node. At the same time, when moving to an upper level hierarchy, if the sum of the smallest reached cost of the boundary node at the departure side and the destination side is bigger than the cost of the route with the shortest cost, the route-searching will be terminated (The details will be described below) ; therefore, the time for searching can be reduced.

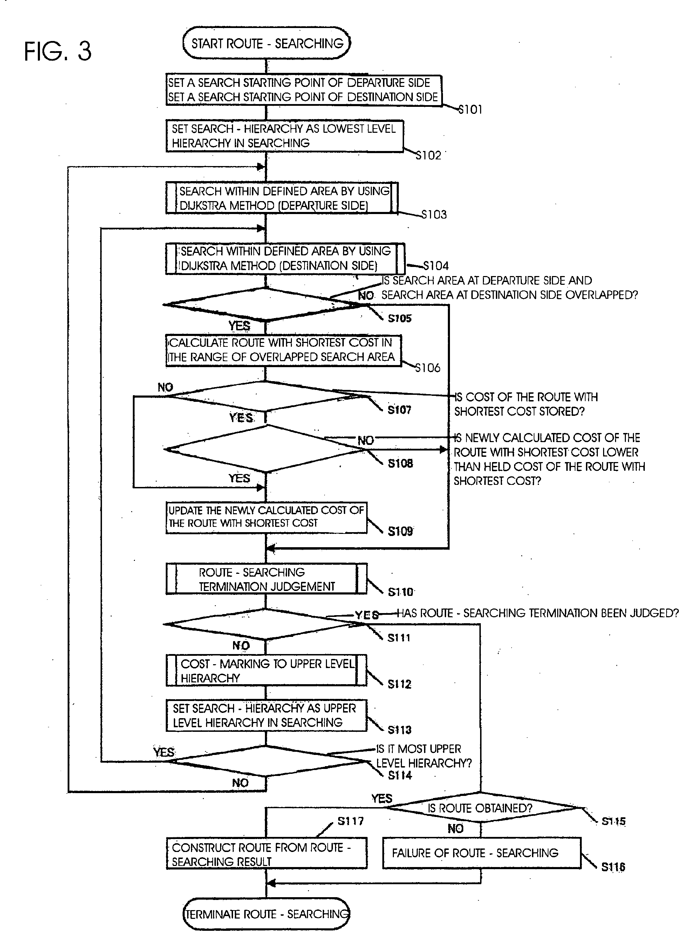

FIG. 3 is a flowchart illustrating an entire flow of route-searching processing.

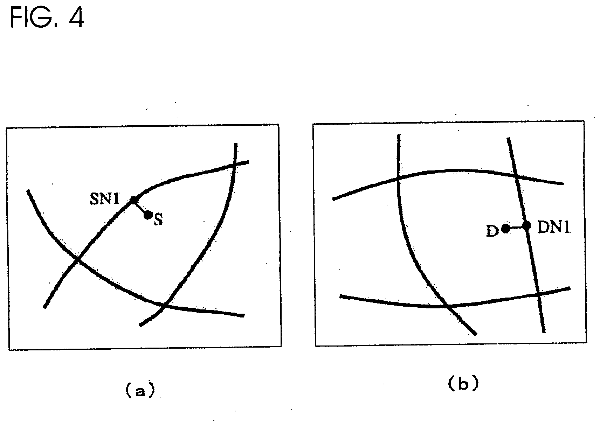

First, a search starting point of a departure place and a search starting point of a destination is set (Step S101). As shown in FIG. 4, these points are set as a node SN1 (See FIG. 4 (a)) on a search target road nearest a departure place S and a node DN1 (See FIG. 4 (b)) on a search target road nearest a destination D, for example. Next, a search hierarchy is to be a lowest level hierarchy in searching a departure place/a destination (Step S102) and a defined area of the departure side and the destination side is searched by Dijkstra method (Steps S103 and S104) . Various costs are set on a link or between-links (a node) depending on road types such as an express way, a toll road, a national road, a main local road, a prefecture road, or narrow street, the existence of traffic restrictions such as no-turns or one-way traffic, a link length, a width of a road, number of traffic lanes, and so forth. A route is searched from a departure place to a destination by Dijkstra method, these costs are added, and a route with the shortest cost is obtained (The details will be described below). It is judged whether or not a search area of the departure side and a search area of the destination side are overlapped in this search (Step S105) and, when they are overlapped, the route with the shortest cost in the range of the overlapped search area is calculated (Step S106).

Next, when a route with the shortest cost has been already obtained, it is judged whether or not the cost is stored (Step S107). When it is stored, it is judged whether or not the cost of the newly calculated route with the shortest cost is smaller than the cost of the stored route with the shortest cost (Step S108). When the route with the shortest cost is not stored in step S107 and the cost of the newly calculated route with the shortest cost at step S108 is smaller, the cost of the route with the shortest cost is updated (Step S109). When the search area of the departure side and the search area of the destination side are not overlapped at step S105 or the cost of the newly calculated route with the shortest cost at step S108 is bigger than the held shortest cost, a judgment is made on terminating the route-searching (The details will be described below) (Step S110). It is determined whether or not the judgment has been made on termination of the route-searching by this judgment (Step S111) and when the judgment has not been made on termination, a cost-marking up to an upper level hierarchy will be performed (The details will be described below) (Step S112) and a search hierarchy for searching a departure/a destination is to be the upper level hierarchy (Step S113). Next, it is determined whether or not this upper level hierarchy is the most upper level hierarchy (Step S114). When it is not the most upper level hierarchy, the sequence returns to step S103 and the search processing will be repeated from the departure side in the same way. When it is the most upper level hierarchy, the sequence returns to step S104 and the search processing will be repeated from the destination side in the same way. When a judgment has been made on the termination of the route-searching at step S111, it is determined whether or not a route has been obtained (Step S115). When the route is not obtained, the route-searching is concluded as a failure (Step S116). When the route is obtained, the route is constructed from the result of the route-searching (Step S117) and the processing ends.

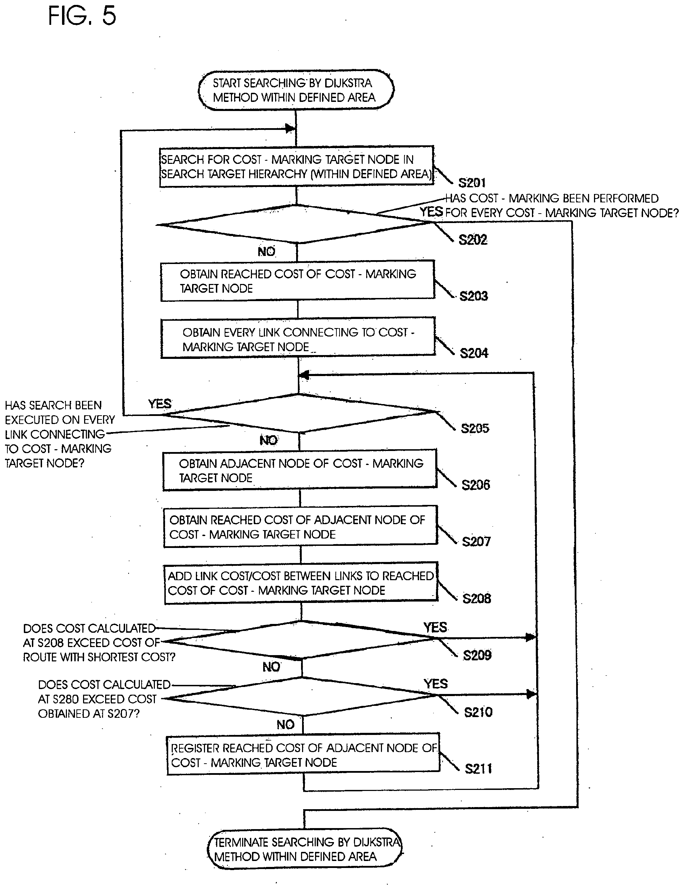

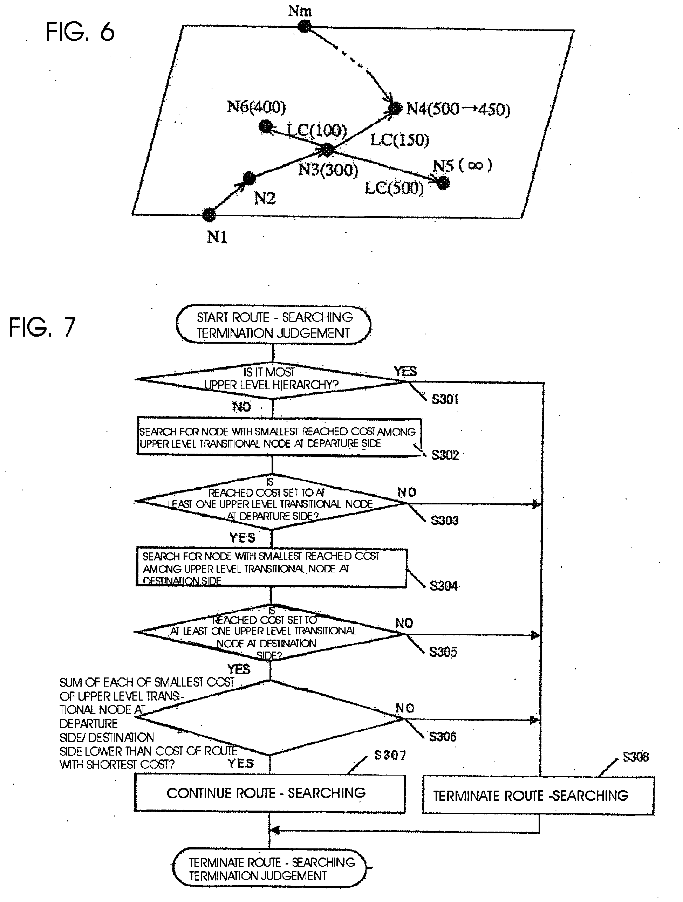

FIG. 5 is a flowchart illustrating a flow of a search processing using Dijkstra method. A cost-marking target node is searched within a defined area of a departure side and a destination side on a search target hierarchy (step S201). It is determined whether or not the cost-marking has been performed to all the cost-marking target nodes (Step S202) . When the cost-marking has not been performed to all the target nodes, a reached cost of the cost-marking target node is obtained (Step S203). In FIG. 6, for example (Black circles denote cost-marking target nodes in a search target area), a cost-marking target node N3 is a node on a route through nodes N1 and N2 and obtains its reached cost 300. Next, every link connecting to the cost-marking target node is obtained (Step S204) and it is determined whether or not a search has been performed on all the obtained links (Step S205) . When a search has not been performed on every link, a reached cost of an adjacent node of the cost-marking target node is obtained (Step S207). In FIG. 6, for example, N4 is an adjacent node of the cost-marking target node N3 and the reached cost 500 is supposed to be set at the adjacent node N4 on a route through the other node Nm, and this value is obtained. Next, the link cost/the cost between links (the node cost) is added to the reached cost of the cost-marking target node (Step S208) and it is judged whether or not the added cost exceeds the cost of the route with the shortest cost (Step S209). When it does not exceed, it is judged whether or not the cost obtained at step S208 exceeds the reached cost of the adjacent node obtained at step S207 (Step S210). In FIG. 6, for example, a link cost LC to be added to the cost-marking target node N3 is 150 and the reached cost of the adjacent node N4 will be 450 after it is added. On the other hand, if the cost of the route with the shortest cost which has been already obtained is assumed to be 700, the cost of the adjacent node N4 which the link cost LC was added to the cost-marking target node N3 is 450. It is smaller than the cost of the route with the shortest cost 700 and further smaller than the reached cost 500 which has already been set at the adjacent node N4. Therefore, the reached cost of the adjacent node N4 will be updated/registered to 450 and the sequence returns to step S205 to perform the same processing.

In the situation where the cost obtained at step S208 exceeds the cost of the route with the shortest cost at step S209, when the cost obtained at step S208 exceeds the cost of the adjacent node at step S210, the reached cost of the adjacent node which has been already set remains and the sequence returns to step S205 to perform the same processing. In FIG. 6, for example, if the link cost LC between the cost-marking target node N3 and the adjacent node N5 is 500, the reached cost of the adjacent node N5 will be 800 and it will exceed the cost of the route with the shortest cost 700 which has been already obtained. Therefore, any further cost-marking will not be performed and a cost ∞ is set at this node and the sequence returns to step S205. The other adjacent node N6 has the link cost LC 100 between the cost-marking target node N3. When it is added, the reached cost will be 400 and this cost is set. Suchlike processing is sequentially performed and the search is executed on every link connecting to the cost-marking target node at step S205. When the cost-marking is completed to all the target nodes within the area at step S202, the search processing within the area ends.

FIG. 7 is a flowchart illustrating a flow of a route-searching termination judgment.

It is determined whether or not a search target hierarchy is a most upper level hierarchy (Step S301). When it is not a most upper level hierarchy, a node with a smallest reached cost is searched among upper level transitional nodes (regional boundary nodes) at the departure side (Step S302) and it is determined whether or not at least one upper level transitional node is set with a reached cost at the departure side (Step S303) . Next, a node with a smallest reached cost is searched among upper level transitional nodes (regional boundary nodes) at the destination side (Step S304) and it is determined whether or not at least one upper level transitional node is set with a reached cost at the destination side (Step S305). When an upper level transitional node is set at both the departure side and the destination side, it is determined whether or not the sum of the smallest cost among the upper level transitional nodes at the each departure side and the destination side is smaller than the cost of the route with the shortest cost (Step S306). When the sum of the smallest cost of each upper level transitional node is smaller than the cost of the route with the shortest cost, the route-searching will be continued. In the case that a reached cost is not set at steps S303 and S305, a search to move to an upper level hierarchy will not be performed. In the case that the sum of the smallest cost of the upper level transitional node at the each departure side and the destination side is bigger than the cost of the route with the shortest cost at step S306, the route-searching will end because any route with shortest cost does not exist even by searching an upper level hierarchy (Step S308).

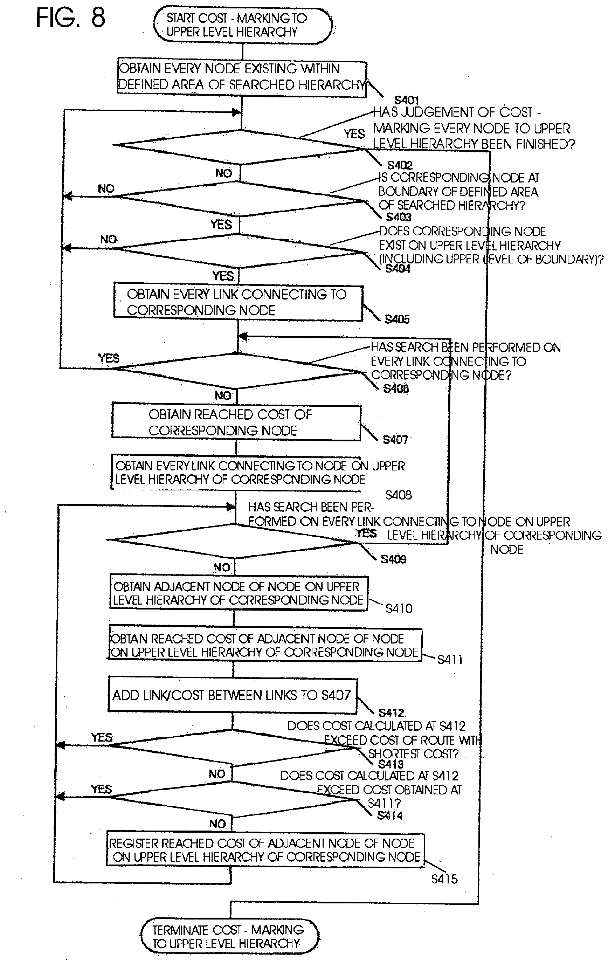

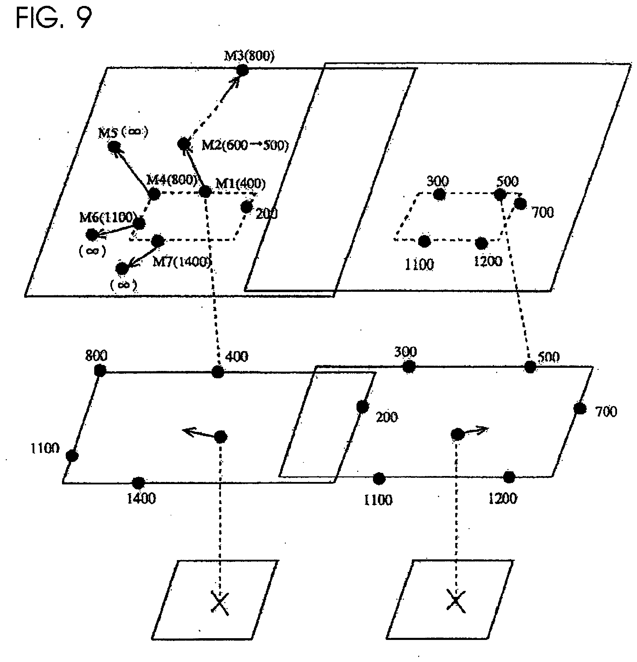

Next, a processing of a cost-marking to an upper level hierarchy will be described with reference to FIG. 8 and FIG. 9.

FIG. 8 is a flowchart illustrating a flow of a processing of a cost-marking to an upper level hierarchy. FIG. 9 is a diagram illustrating an example of a cost-marking to an upper level hierarchy.

In FIG. 8, every node existing within a defined area of a searched hierarchy is obtained (Step S401). On the searched hierarchy, a cost-marking to every node within the defined area has been completed by Dijkstra method. It is determined whether or not a judgment on a cost-marking to the every node to an upper level has been completed (step S402) and when it has not been completed, it is judged whether or not a corresponding focused node is a node existing at the boundary within the defined area of the searched hierarchy (Step S403). If it is not the boundary node, the sequence returns to step S402 and the processing will be continued. This is the processing in which the nodes for moving to an upper level hierarchy are only the boundary nodes. When it is the boundary node, it is judged whether or not the corresponding node exists within the defined area on an upper level hierarchy (including the boundary) (Step S404). When it does not exist within the defined area of the upper level hierarchy (including the boundary), the search cannot be continued; therefore, the sequence returns to step S402 and the processing will be continued. If the corresponding node is the boundary node and also the corresponding node exists on the upper level hierarchy, every link connecting to the corresponding node is obtained (Step S405) and it is judged whether or not the search has been completed on every link connecting to the corresponding node (Step S406). The search on every link connecting to the boundary node is a search processing of the route with the shortest cost on the search hierarchy. At the stage of the processing of the cost-marking to the upper level hierarchy, the obtaining processing of the route with the shortest cost on the search hierarchy is performed in parallel. In FIG. 9, for example, by the search processing on the search hierarchy, the cost of five boundary nodes at the departure side is 200, 400, 800, 1100, and 1400 each and the cost of five boundary nodes at the destination side is 300, 500, 700, 1100, and 1200 each. In that case, these nodes automatically move to the upper level hierarchy and at the same time a route is searched between the five boundary nodes on the search hierarchy and the route with the shortest cost is searched in parallel with the cost-marking to the upper level hierarchy.

When the search on every link is not completed at step S406, a reached cost of the corresponding node is obtained (Step S407) and every link connecting to the node on the upper level hierarchy of the corresponding node is obtained (Step S408). Next, it is determined whether or not the search has been completed on every link connecting to the node on the upper level hierarchy of the corresponding node (Step S409). When the search has not been completed on every link, an adjacent node of the node on the upper level hierarchy of the corresponding node is obtained (Step S410) and the reached cost is obtained (Step S411). Then, the link cost/the cost between links (node) between the corresponding node and the adjacent node is added to the reached cost of the corresponding node obtained at step S407 and it is determined whether or not the added cost exceeds the cost of the route with the shortest cost obtained at this stage (Step S413). When it does not exceed, it is determined whether or not the added cost exceeds the reached cost of the adjacent node of the node on the upper level hierarchy of the corresponding node (Step S414) . If any of them do not exceed, the reached cost of the adjacent node of the node on the upper level hierarchy of the corresponding node is registered/updated and the sequence returns to step S409 and the processing will be continued in the same way. In the area of the departure side in FIG. 9, taking node M1 with the cost 400 for example, when a link cost LC between the node M1 and the adjacent node M2 is 100, the cost 400 of the node M1 is added to the link cost 100 to obtain the reached cost 500 of the adjacent node M2. If the cost of the route with the shortest cost obtained at this stage is 1000, the reached cost of the adjacent node M2 is smaller than the cost with the shortest cost. When it is assumed that the reached cost 600 is set at the adjacent node M2 through a search from other route, the reached cost of the adjacent node M2 obtained through the search from the node M1 is smaller than that; therefore, the reached cost of the adjacent node M2 will be registered/updated from 600 to 500. As described above, a cost-marking is performed sequentially to obtain the cost 800 of the boundary node M3 in the area of the upper level hierarchy.

When the cost calculated at step S412 (the cost that the reached cost of the corresponding node is added to the link cost/the cost between links (node)) exceeds the cost of the route with the shortest cost at step S413, any further cost-marking will not be performed and the sequence returns to step S409 and the processing will be continued in the same way. In the area of the departure side in FIG. 9, taking the node M4 with the reached cost 800 for example, if a link LC cost between the node M4 and the adjacent node M5 is 250, the reached cost of the adjacent node M5 is 1050 which exceeds the cost 1000 of the route with the shortest cost; therefore, any further cost-marking will not be performed after that and a cost ∞ is set at the node M5. As for nodes M6 and M7, the cost 1000 of the route with shortest cost has not been recognized at the time of moving to the upper level hierarchy; therefore, the costs 1100 and 1400 are set. However, the reached cost of every node connecting to these nodes exceeds the cost of the route with the shortest cost; therefore, any further cost-marking will not be performed after that and a cost ∞ is set at theses nodes. In addition, if the cost calculated at step S412 exceeds the reached cost of the adjacent node at step S414, the cost will not also be registered and the sequence returns to step S409 to continue the same processing. Thus, when a search has been completed on every link connecting to the node on the upper level hierarchy at step S409 and when it is judged that the cost-marking to every node to the upper level hierarchy on the search hierarchy has been completed at step S402, the cost-marking to the upper level hierarchy ends.

## Claims

1. A method for searching for a route from a departure place to a destination, comprising the steps of:
reading out map data with a hierarchical structure comprising a plurality of layers from an information storage unit (3), each of the hierarchical layers having a plurality of blocks of predetermined area, a lower level hierarchy including detailed map data with data for every road and an upper level hierarchy including wide-area map data with data for main roads only;
searching for a route within a predetermined search area of a departure side and within a predetermined search area of a destination side on the lowest level hierarchical layer;
if a route searched in each of the search areas is overlapped, obtaining a route with a shortest cost;
for each hierarchical layer between the lowest level hierarchical layer and the most upper level hierarchical layer, performing the further steps of:
- performing a search for a route in a search area of the departure side and in a search area of the destination side by setting nodes on the hierarchical layer corresponding to boundary nodes that have been reached in the search areas on the lower level hierarchical layer as starting points to search a route and holding a searching cost of each node; and
- if the route searched in each of the search areas is overlapped on the hierarchical layer and the cost of the route is smaller than the cost of the route obtained on the lower level hierarchical layer, update the route with a shortest cost by the searched route;
on the most upper level hierarchical layer, executing a search from the destination side by setting nodes on the most upper level hierarchical layer corresponding to boundary nodes that have been reached in the search areas on the lower level hierarchical layer as starting points to search a route and holding a searching cost of each node and, if the cost of the route obtained is smaller than the route with a shortest cost on the lower level hierarchy, updating the route with a shortest cost by the obtained route.

2. A navigation apparatus for searching for a route from a departure place to a destination, comprising:
an information storage unit (3) adapted for storing map data with a hierarchical structure comprising a plurality of layers, each of the layers having blocks of data of predetermined area, a lower level hierarchy including detailed map data for every road and an upper level hierarchy including wide-area map data for main roads only; a route-searching unit (4a) adapted for reading out map data from the information storage unit (3) and searching for a route within a predetermined search area of a departure side and within a predetermined search area of a destination side on one hierarchical level;a control unit (4b) adapted for controlling the searching by the route-searching unit (4a); wherein the route searching unit (4a) and the control unit (4b) are configured to perform the steps of the method according to claim 1.

3. A computer program comprising instructions that when executed on a computer cause the computer to perform the steps of the method according to claim 1.

## Patentansprüche

1. Verfahren zum Suchen nach einer Route von einem Abfahrtsort zu einem Ziel, mit den Schritten:
Auslesen von Kartendaten mit einer hierarchischen Struktur, die eine Mehrzahl von Schichten aufweist, aus einer Informationsspeichereinheit (3), bei der jede der hierarchischen Schichten eine Mehrzahl von Blöcken vorherbestimmter Fläche aufweist, eine Hierarchie niedrigeren Niveaus detaillierte Kartendaten mit Daten für jede Straße aufweist und eine Hierarchie oberen Niveaus weitflächige Kartendaten mit Daten für lediglich Hauptverkehrsstraßen aufweist;
Suchen nach einer Route innerhalb eines vorherbestimmten Suchgebiets einer Abfährtsseite und" innerhalb eines vorherbestimmten Suchgebiets einer Zielseite auf der hierarchischen Schicht niedrigsten Niveaus;
falls eine Route, die in jedem der Suchgebiete gesucht wird, überlappt, Erhalten einer Route mit kürzesten Kosten;
für jede hierarchische Schicht zwischen der hierarchischen Schicht niedrigsten Niveaus und der hierarchischen Schicht obersten Niveaus, Durchführen der folgenden Schritte:
- Durchführen einer Suche nach einer Route in einem Suchgebiet der Abfahrtsseite und in einem Suchgebiet der Zielseite durch Festlegen von Knoten auf der hierarchischen Schicht, die Grenzknoten, die in den Suchgebieten auf der hierarchischen Schicht niedrigeren Niveaus erreicht worden sind, entsprechen, als Startpunkte zum Suchen einer Route und Halten von Suchkosten jedes Knotens; und
- falls die Route, die in jedem der Suchgebiete gesucht wird, auf der hierarchischen Schicht überlappt und die Kosten der Route kleiner als die Kosten der Route, die auf der hierarchischen Schicht niedrigeren Niveaus erhalten wird, sind, aktualisiere die Route mit kürzesten Kosten mit der gesuchten Route;
auf der hierarchischen Schicht obersten Niveaus, Ausführen einer Suche von der Zielseite durch Festlegen von Knoten auf der hierarchischen Schicht obersten Niveaus, die Grenzknoten, die in den Suchgebieten auf der hierarchischen Schicht niedrigeren Niveaus erreicht worden sind, entsprechen, als Startpunkte zum Suchen einer Route und Halten von Suchkosten für jeden Knoten und, falls die Kosten der Route, die erhalten wird, kleiner als die Route mit kürzesten Kosten auf der Hierarchie niedrigeren Niveaus sind, Aktualisieren der Route mit kürzesten Kosten mit der erhaltenen Route.

2. Navigationsvorrichtung zum Suchen nach einer Route von einem Abfahrtsort zu einem Ziel, mit:
einer Informationsspeichereinheit (3), die dazu angepasst ist, Kartendaten mit einer hierarchischen Struktur, die eine Mehrzahl von Schichten aufweist, zu speichern, bei der jede der Schichten Blöcke von Daten vorherbestimmter Fläche aufweist, eine Hierarchie niedrigeren Niveaus detaillierte Kartendaten für jede Straße aufweist und eine Hierarchie oberen Niveaus weitflächige Kartendaten für lediglich Hauptverkehrsstraßen aufweist; einer Routensucheinheit (4a), die dazu angepasst ist, Kartendaten aus der Informationsspeichereinheit (3) auszulesen und nach einer Route innerhalb eines vorherbestimmten Suchgebiets einer Abfahrtsseite und innerhalb eines vorherbestimmten Suchgebiets einer Zielseite auf einem hierarchischen Niveau zu suchen; einer Steuerungseinheit (4b), die dazu angepasst ist, das Suchen durch die Routensucheinheit (4a) zu steuern;
bei der die Routensucheinheit (4a) und die Steuerungseinheit (4b) dazu ausgebildet sind, die Schritte des Verfahrens gemäß Anspruch 1 durchzuführen.

3. Computerprogramm mit Anweisungen, die, wenn sie auf einem Computer ausgeführt werden, den Computer dazu veranlassen, die Schritte des Verfahrens gemäß Anspruch 1 durchzuführen.

## Revendications

1. Procédé de recherche d'un itinéraire depuis un lieu de départ jusqu'à une destination, comprenant les étapes consistant à :
lire des données cartographiques avec une structure hiérarchique comprenant une pluralité de couches à partir d'une unité de stockage d'informations (3), chacune des couches hiérarchiques ayant une pluralité de blocs de zone prédéterminée, une hiérarchie de niveau inférieur comprenant des données cartographiques détaillées avec des données pour chaque route et une hiérarchie de niveau supérieur comprenant des données cartographiques de zones étendues avec uniquement des données relatives aux routes principales ;
rechercher un itinéraire dans une zone de recherche prédéterminée d'un côté départ et dans une zone de recherche prédéterminée d'un côté destination sur la couche hiérarchique de niveau le plus bas ;
si un itinéraire recherché dans chacune des zones de recherche est chevauché, obtenir un itinéraire avec un coût le plus court possible ;
pour chaque couche hiérarchique entre la couche hiérarchique de niveau le plus bas et la couche hiérarchique de niveau le plus élevé, en effectuant les étapes supplémentaires consistant à :
- effectuer une recherche d'un itinéraire dans une zone de recherche du côté départ et dans une zone de recherche du côté destination en définissant des noeuds sur la couche hiérarchique correspondant aux noeuds de limite qui ont été atteints dans les zones de recherche de la couche hiérarchique de niveau inférieur comme points de départ pour rechercher un itinéraire et maintenir un coût de recherche de chaque noeud ; et
- si l'itinéraire recherché dans chacune des zones de recherche est chevauché sur la couche hiérarchique et que le coût de l'itinéraire est inférieur au coût de l'itinéraire obtenu sur la couche hiérarchique de niveau inférieur, mettre à jour l'itinéraire avec un coût le plus court par l'itinéraire recherché ;
sur la couche hiérarchique de niveau le plus élevé, exécuter une recherche du côté de la destination en définissant des noeuds sur la couche hiérarchique de niveau le plus élevé correspondant aux noeuds de limites qui ont été atteints dans les zones de recherche de la couche hiérarchique de niveau inférieur comme points de départ pour la recherche d'un itinéraire et maintenir un coût de recherche de chaque noeud et, si le coût de l'itinéraire obtenu est inférieur à celui de l'itinéraire avec le coût le plus court sur la hiérarchie de niveau inférieur, mettre à jour l'itinéraire avec un coût le plus court par l'itinéraire obtenu.

2. Appareil de navigation permettant de rechercher un itinéraire depuis un lieu de départ jusqu'à une destination, comprenant :
une unité de stockage d'informations (3) adaptée pour stocker des données cartographiques avec une structure hiérarchique comprenant une pluralité de couches, chacune des couches comportant des blocs de données de zone prédéterminée, une hiérarchie de niveau inférieur comprenant des données cartographiques détaillées pour chaque route et une hiérarchie de niveau supérieur comprenant des données cartographiques de zones étendues pour des routes principales uniquement ; une unité de recherche d'itinéraire (4a) adaptée pour extraire des données cartographiques de l'unité de stockage d'informations (3) et rechercher un itinéraire dans une zone de recherche prédéterminée d'un côté de départ et dans une zone de recherche prédéterminée d'un côté de destination sur un niveau hiérarchique ; une unité de commande (4b) adaptée pour commander la recherche par l'unité de recherche d'itinéraire (4a),
dans lequel l'unité de recherche d'itinéraire (4a) et l'unité de commande (4b) sont configurées pour exécuter les étapes du procédé selon la revendication 1.

3. Programme d'ordinateur comprenant des instructions qui, lorsqu'elles sont exécutées sur un ordinateur, amènent celui-ci à exécuter les étapes du procédé selon la revendication 1.
